# NEUE EUROPÄISCHE PATENTSCHRIFT

(11) **EP 0 681 114 B2**
(45) Veröffentlichungstag und Bekanntmachung des Hinweises auf die Entscheidung über den Einspruch: **14.09.2005**
(45) Hinweis auf die Patenterteilung: 30.06.1999
(21) Anmeldenummer: 95103802.5
(22) Anmeldetag: 16.03.1995
(51) Int. Cl.: F16C 33/12

(54) **Gleitlagerwerkstoff**
Plain bearing material
Matériau pour palier lisse

(30) Priorität: 06.04.1994 DE 4411762
(43) Veröffentlichungstag der Anmeldung: 08.11.1995
(73) Patentinhaber: KS Gleitlager GmbH, 68789 St. Leon-Rot (DE)
(72) Erfinder: Deicke, Klaus, D-74257 Untereisesheim (DE); Schubert, Werner, D-69168 Wiesloch (DE); Müller, Manfred, D-74257 Untereisesheim (DE)
(74) Vertreter: Dreiss, Fuhlendorf, Steimle & Becker

(56) Entgegenhaltungen:
- DE-A- 1 187 805
- FR-A- 2 519 395
- GB-A- 2 270 721
- E.Roemer, "Aspekte zur Gleitlagerung von Nutzfahrzeug-Dieselmotoren", Sonderdruck, MTZ Nr. 79, Nr. 9/77
- "Gleitlager gerollte Buchsen" Katalog der Karl Schmidt GmbH, vor 1993
- "Kupfer-Zink-Legierungen (Messing und Sondermessing)", Deutsches Kupferinstitut, 1966
- K. Dies, "Gleitwerkstoffe für die Maschinenindustrie", Vereinigte Deutsche Metallwerke A.G., 54. Jahrgang 1960
- E. Roemer, "Die Berechnung des Presssitzes von Gleitlagerschalen", MTZ, Jahrgang 22, Heft 2 und 4/1961
- E. Roemer, "Werkstoffe und Schichtaufbau bei Gleitlagern", Zeitschrift für Werkstofftechnik, Heft 7, 1973

## Beschreibung

Die Erfindung betrifft die Verwendung eines Gleitlagerverbundwerkstoffs für die Herstellung von Lagerbuchsen.

Die Verwendung eines Gleitlagerwarkstoffs aus Kupfer-Zink-Knetlegierung, insbesondere des Typs CuZn31Si, ist bekannt. Aus diesem, innerhalb der deutschen Norm 17 660 aufgeführten Gleitlagerwerkstoff, der als Monometall eingesetzt wird und ein gutes Gleitverhalten bei mittlerer Lagerbelastung besitzt, werden Lagerbuchsen mit einer Wanddicke von 1 bis 15 mm für LKW-Achsschenkel, für Werkzeugmaschinen und dergleichen hergestellt. Werden derartige Lagerbuchsen jedoch vergleichsweise höheren Belastungen, wie diese z.B. bei Pleuellagerungen auftreten, ausgesetzt, reicht In aller Regel die Tragfähigkeit dieses Monometall-Gleitlagerwerkstoffs nicht aus, so daß Veränderungen von Gefüge und Struktur, insbesondere in der Oberfläche des Gleitlagerwerkstoffs, auftreten. Außerdem ist der Einsatz von aus Monometall bestehenden Gleitlagerwerkstoffen nicht mehr wirtschaftlich.

Es ist weiterhin bekannt, Gleitlagerverbundwerkstoffe, bestehend aus einer Stahlstützschicht und einer aufgesinterten oder aufgegossenen Schicht aus Kupfer-Blei-Zinn-Legierung oder walzplattierten Aluminium-Zink-Legierungen (siehe GB-A-2 270 721) für Gleitlagerungen einzusetzen. Jedoch sind auch solche Verbund-Gleitlagerwerkstoffe den hohen Belastungen z.B. in modernen Verbrennungskraftmaschinen nicht mehr gewachsen. Ebenso treten immer häufiger Schäden durch korrosiven Angriff auf. Dies kann zum Ausfall der Verbrennungskraftmaschine führen.

Aufgabe der vorliegenden Erfindung ist es, die mechanisch-technologischen Eigenschaften des eingangs genannten Gleitlagerwerkstoffs so zu verbessern, daß seine Belastbarkeit verbessert, die Nachteile der vorstehend angeführten Gleitlagerwerkstoffe vermieden und damit der Anwendungsbereich erweitert wird.

Die Lösung dieser Aufgabe besteht in einer Verwendung nach Anspruch 1.

Zweckmäßigerweise besteht die Verbindung zwischen der Kupfer-Zink-Knetlegierung und der Stützschicht aus einem Walzplattierverbund.

Gegebenenfalls ist es angebracht, zwischen der Stahlstützschicht und der Gleitlagerwerkstoffschicht eine 10 bis 200 µm dicke Zwischenschicht aus Kupfer oder Kupferlegierung oder andere geeignete Zwischenschichten vorzusehen.

Zur Herstellung des Stahl/CuZn31Si-Verbund-Gleitlagerwerkstoffs werden ein kaltgewalztes Stahlband und ein CuZn31Si-Band gleichzeitig in einem Durchlaufverfahren entfettet, geschliffen bzw. gebürstet und in einem Plattierwalzwerk miteinander verbunden. Dabei werden unter dem Walzendruck das Stahlband und das CuZn31Si-Band unterschiedlich stark verformt; die dadurch entstehende Relativbewegung verursacht eine Reibschweißung der beiden Werkstoffkomponenten. Nach dem Abkühlen und Aufhaspeln des Verbund-Gleitlagerwerkstoffbandes wird dieses einer Wärmebehandlung unter Schutzgasatmosphäre unterzogen, wobei die Bindung zwischen dem Stahl und der CuZn31 Si-Schicht durch einen Diffusionsprozeß gesteigert und ein verbessertes Gefüge der CuZn31Si-Werkstoffschicht erreicht wird. Gegebenenfalls werden zur Herstellung enger Banddickentoleranzen und zur weiteren Steigerung der Festigkeitswerte die Verbund-Gleitlagerwerkstoffbänder auf einem Walzwerk mit Walzspaltkonstanthaltung kalibriert.

Der erfindungsgemäß aufgebaute Verbund-Gleitlagerwerkstoff vereinigt nur die günstigen Gleiteigenschaften und die Korrosionsbeständigkeit der Kupter-Zink-Knetlegierungen, insbesondere des Typs CuZn31Si, mit der hohen Belastbarkeit von Stahl-Verbund-Gleitlagerwerkstoffen. Der Verbund-Gleitlagerwerkstoff nach der Erfindung läßt sich sehr kostengünstig und mit geringen Toleranzen herstellen und zeigt überraschend gute Eigenschaften bei der Umformung zu Gleitelementen.

## Patentansprüche

1. Verwendung eines Gleitlagerverbundwerkstoffs für die Herstellung von Lagerbuchsen, wobei eine Schicht bestehend aus einer Kupfer-Zink-Knetlegierung in einer Dicke von 0,1 bis 1,5 mm mit einer Stützschicht aus Stahl oder rostfreiem Stahl unlösbar verbunden ist, wobei die Kupfer-Zink-Knetlegierung zusammengesetzt ist aus
28 bis 32 Gew.-% Zink
0,7 bis 1,3 Gew.-% Silizium
66 bis 70 Gew.-% Kupfer.

2. Verwendung nach Anspruch 1, **dadurch gekennzeichnet, daß** zwischen der Schicht der Kupfer-Zink-Knetlegierung und der Stützschicht aus Stahl oder rostfreiem Stahl eine Walzplattierverbindung besteht.

## Claims

1. Use of a plain-bearing composite material for manufacturing bearing bushes, in which a layer comprising a cooper-zinc wrought alloy having a thickness of 0.1 to 1.5 mm is inseparably connected to a supporting layer of steel or stainless steel, wherein
28 to 32 % by weight of zinc
0.7 to 1.3 % by weight of silicon
66 to 70 % by weight of copper.

2. Use of a plain-bearing composite material according to Claim 1, **characterized in that** there is a roll-bonded connection between the layer of copper-zinc wrought alloy and the supporting layer of steel or stainless steel.

## Revendications

1. Usage d'un matériau composite pour palier lisse pour la fabrication de coussinets, dans lequel une couche consistant en un alliage corroyé cuivre-zinc d'une épaisseur comprise entre 0,1 et 1,5 mm est reliée de manière inamovible à une couche support en acier ou acier inoxydable, et l'alliage corroyé cuivre-zinc est composé de
28 à 32 % en poids de zinc
0,7 à 1,3 % en poids de silicium
66 à 70 % en poids de cuivre.

2. Usage d'un matériau composite pour palier lisse selon la revendication 1, **caractérisé en ce que** la couche en alliage corroyé cuivre-zinc est plaquée par laminage sur la couche support en acier ou acier inoxydable.
